# EUROPEAN PATENT APPLICATION

(11) **EP 4 804 601 A1**
(43) Date of publication of application: **09.09.2026**
(21) Application number: 26158982.4
(22) Date of filing: 17.02.2026
(51) Int. Cl.: H04W 24/06, H04W 24/04

(54) **WIRELESS NETWORK PERFORMANCE TESTING**

(30) Priority: 07.03.2025 FI 20255198
(71) Applicant: Nokia Solutions and Networks Oy, 02610 Espoo (FI)
(72) Inventor: RAWAT, Akhilesh, Bangalore (IN); LIAO, Qi, Ingolstadt (DE)
(74) Representative: Nokia EPO representatives

(57) **Abstract**

To perform network performance testing, at least one target state is obtained and a first action to be performed is determined. The first action is sent to a test system, which comprises a payload generating part and a serving part. When feedback, which comprises at least network performance counter values of network performance counters and represents a current state of the serving part, is received from the test system, it is determined, based at least on the counter values received, whether the the target state is achieved. If not, a next action to be performed is determined, based on at least a difference between the target state and a state determined using at least the counter values received. The next action is then sent to the test system. This may be repeated until the target state is achieved.

## Description

### TECHNICAL FIELD

Various example embodiments relate to wireless communications.

### BACKGROUND

Communication systems are under constant development. As wireless communication systems evolve, wireless networks are becoming increasingly complex to better meet dynamic traffic patterns and different requirements. That in turn creates challenges in network performance testing, which are traditionally using statistically programmed simulators. A solution enabling better capability to replicate a wide variety of network configurations and services is desired.

### SUMMARY

The independent claims define the scope. Dependent claims disclose embodiments.

According to an aspect there is provided an apparatus comprising at least one processor, and at least one memory storing instructions that, when executed by the at least one processor, cause the apparatus at least to: obtain at least one target state for a wireless network; determine a first action to be performed to achieve the target state; cause sending the first action to a test system comprising a payload generating part and a serving part comprising network elements, the payload generating part generating to the network elements payload; receive from the test system feedback comprising at least network performance counter values of network performance counters, the network performance counter values being collected on the serving part under the payload and representing a current state of the serving part; determine, based at least on the network performance counter values received, whether the serving part achieved the target state; when the target state is not achieved, determine, based on at least a difference between the target state and a state determined using at least the network performance counter values received, a next action to be performed to achieve the target state and cause sending the next action to the test system; and repeat the determining the next action and causing sending the next action to the test system until the target state is achieved.

According to an aspect there is provided a method comprising: obtaining at least one target state for a wireless network; determining a first action to be performed to achieve the target state; causing sending the first action to a test system comprising a payload generating part and a serving part comprising network elements, the payload generating part generating to the network elements payload; receiving from the test system feedback comprising at least network performance counter values of network performance counters, the network performance counter values being collected on the serving part under the payload and representing a current state of the serving part; determining, based at least on the network performance counter values received, whether the serving part achieved the target state; when the target state is not achieved, determining, based on at least a difference between the target state and a state determined using at least the network performance counter values received, a next action to be performed to achieve the target state and causing sending the next action to the test system; and repeating the determining the next action and causing sending the next action to the test system until the target state is achieved.

According to an aspect there is provided a computer readable medium comprising program instructions which, when executed by an apparatus, cause the apparatus to perform at least: obtaining at least one target state for a wireless network; determining a first action to be performed to achieve the target state; causing sending the first action to a test system comprising a payload generating part and a serving part comprising network elements, the payload generating part generating to the network elements payload; receiving from the test system feedback comprising at least network performance counter values of network performance counters, the network performance counter values being collected on the serving part under the payload and representing a current state of the serving part; determining, based at least on the network performance counter values received, whether the serving part achieved the target state; when the target state is not achieved, determining, based on at least a difference between the target state and a state determined using at least the network performance counter values received, a next action to be performed to achieve the target state and causing sending the next action to the test system; and repeating the determining the next action and causing sending the next action to the test system until the target state is achieved.

According to an aspect there is provided a computer program comprising instructions which, when executed by an apparatus, cause the apparatus to perform at least: obtaining at least one target state for a wireless network; determining a first action to be performed to achieve the target state; causing sending the first action to a test system comprising a payload generating part and a serving part comprising network elements, the payload generating part generating to the network elements payload; receiving from the test system feedback comprising at least network performance counter values of network performance counters, the network performance counter values being collected on the serving part under the payload and representing a current state of the serving part; determining, based at least on the network performance counter values received, whether the serving part achieved the target state; when the target state is not achieved, determining, based on at least a difference between the target state and a state determined using at least the network performance counter values received, a next action to be performed to achieve the target state and causing sending the next action to the test system; and repeating the determining the next action and causing sending the next action to the test system until the target state is achieved.

### BRIEF DESCRIPTION OF DRAWINGS

Embodiments are described below, by way of example only, with reference to the accompanying drawings, in which
Fig. 1 illustrates an exemplified high-level system architecture on a wireless communication network and a testing environment;
Fig. 2 illustrates an example functionality;
Fig. 3 illustrates an example functionality;
Fig. 4 is a schematic block diagram;
Fig. 5 illustrates an example of information exchange;
Fig. 6 illustrates an example of information exchange;
Fig. 7 illustrates an example of information exchange;
Fig. 8 illustrates an example of information exchange;
Fig. 9 illustrates an example of information exchange;
Fig. 10 illustrates an example of information exchange;
Fig. 11 is a schematic block diagram; and
Fig. 12 is a schematic block diagram.

### DETAILED DESCRIPTION OF SOME EMBODIMENTS

The following embodiments are only presented as examples. Although the specification may refer to "an", "one", or "some" embodiment(s) and/or example(s) in several locations, this does not necessarily mean that each such reference is to the same embodiment(s) or example(s), or that a particular feature only applies to a single embodiment and/or single example. Single features of different embodiments and/or examples may also be combined to provide other embodiments and/or examples within the scope of claims. Furthermore, words "comprising" and "including" should be understood as not limiting the described embodiments to consist of only those features that have been mentioned and such embodiments may also contain features/structures that have not been specifically mentioned. Reference numbers, in the description and/or in the claims, serve to illustrate the embodiments with reference to the drawings, without limiting the embodiments to these examples only.

Further, it should be appreciated that, as used herein, the terms "the at least one" and "the one or more" mean "any one of the at least one" and "any one of the one or more", respectively. Furthermore, as used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

Some example embodiments described herein may be implemented in a wireless communication network comprising a radio access network based on one or more of the following radio access technologies (RATs): global system for mobile communications (GSM) or any other second generation (2G) radio access technology, universal mobile telecommunication system (UMTS, 3G) based on basic wideband-code division multiple access (W-CDMA), high-speed packet access (HSPA), long term evolution (LTE), LTE-Advanced, fourth generation (4G), fifth generation (5G), 5G new radio (NR), 5G-Advanced (3GPP NR Rel-18 and beyond), sixth generation (6G), or seventh generation (7G), or beyond. Some examples of radio access networks include the universal mobile telecommunications system (UMTS) radio access network (UTRAN), the evolved universal terrestrial radio access network (E-UTRA), or the next generation radio access network (NG-RAN). The wireless communication network may further comprise a core network, and some example embodiments may also be applied to network functions of the core network.

It should be noted that the embodiments are not restricted to the wireless communication network given as an example, but a person skilled in the art may also apply the solution to other wireless communication networks or systems provided with necessary properties. For example, some example embodiments may also be applied to a communication system based on IEEE 802.11 specifications, or a communication system based on IEEE 802.15 specifications. IEEE is an abbreviation for the Institute of Electrical and Electronics Engineers.

Some example embodiments are described below using principles and terminology of 5G radio access technology without limiting the example embodiments to 5G radio access technology, however.

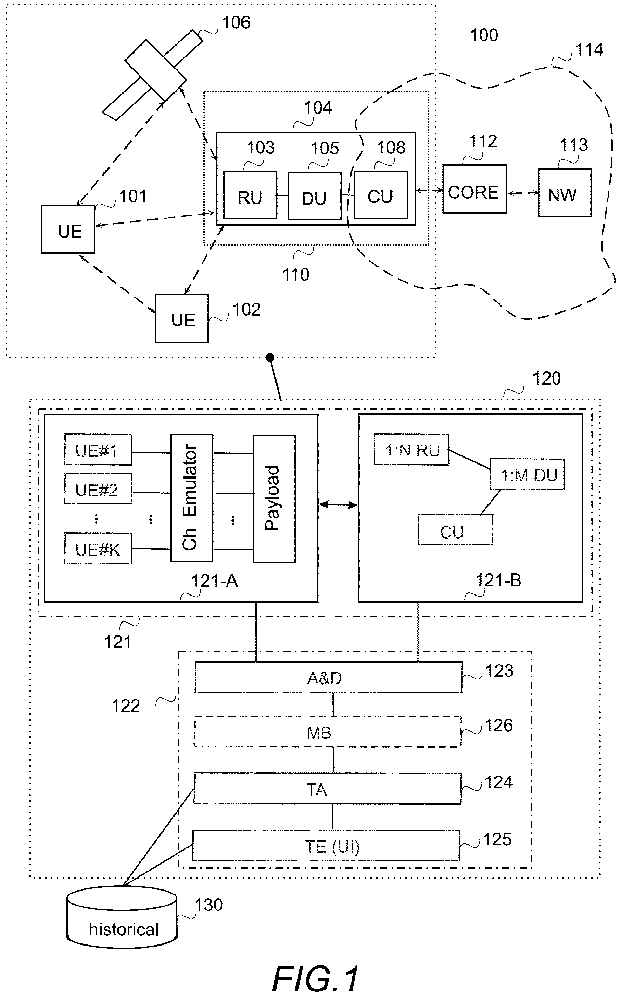

Fig. 1 depicts an example of a high-level system 100 architecture with a simplified illustration of a wireless communication network and a testing environment, showing some physical and logical entities. The connections shown in Fig. 1 may be physical connections or logical connections. It is apparent to a person skilled in the art that the wireless communication network and the testing environment may also comprise other physical and logical entities than those shown in Fig. 1.

The example wireless communication network shown in Fig. 1 includes a radio access network (RAN) 110 and a core network 112.

Fig.1 shows user equipment (UE) 101, 102, configured to be in a wireless connection on one or more communication channels in a radio cell with an access node 104 of a radio access network 110.

The access node 104 may comprise a computing device configured to control the radio resources of the access node 104 and to be in a wireless connection with one or more UEs 101, 102. The access node 104 may also be referred to as a base station, a base transceiver station (BTS), an access point, a cell site, a network node, a radio access network node, a RAN node or a network device. In this description, the terms "access node" and "radio access network node" may be used interchangeably.

The access node 104 may be, for example, an evolved NodeB (abbreviated as eNB or eNodeB), or a next generation evolved NodeB (abbreviated as ng-eNB), or a next generation NodeB (abbreviated as gNB or gNodeB), or a split gNB, i.e. any apparatus or device providing the radio cell. The access node 104 may include or be coupled to transceivers. From the transceivers of the access node 104, a connection may be provided to an antenna unit that establishes a bi-directional radio link to one or more UEs 101, 102. The antenna unit may comprise an antenna or antenna element, or a plurality of antennas or antenna elements.

The wireless connection (e.g., radio link) from a UE 101, 102 to the access node 104 may be called uplink (UL) or reverse link, and the wireless connection (e.g., radio link) from the access node 104 to the UE 101, 102 may be called downlink (DL) or forward link. A UE 101 may also communicate directly with another UE 102, and vice versa, via a wireless connection generally referred to as a sidelink (SL). It should be appreciated that the access node 104 or its functionalities may be implemented by using any node, host, server, access point or other entity suitable for providing such functionalities.

The radio access network may comprise more than one access node 104, in which case the access nodes may also be configured to communicate with one another over wired or wireless links. These links between access nodes may be used for transmitting (sending) and/or receiving control plane signaling and also for routing data from one access node to another access node.

The access node 104 may further be connected to a core network (CN) 112. The core network 112 may comprise an evolved packet core (EPC) network and/or a 5^{th} generation core network (5GC). The EPC may comprise network entities, such as a serving gateway (S-GW for routing and forwarding data packets), a packet data network gateway (P-GW) for providing connectivity of UEs to external packet data networks, and/or a mobility management entity (MME). The 5GC may comprise one or more network functions, such as at least one of: a user plane function (UPF), an access and mobility management function (AMF), a location management function (LMF), and/or a session management function (SMF).

The core network 112 may also be able to communicate with one or more external networks 113, such as a public switched telephone network or the Internet, or utilize services provided by them. For example, in 5G wireless communication networks, the UPF of the core network 112 may be configured to communicate with an external data network via an N6 interface. In LTE wireless communication networks, the P-GW of the core network 112 may be configured to communicate with an external data network.

It should also be understood that the distribution of functions between core network operations and access node operations may differ in future wireless communication networks compared to that of the LTE or 5G, or even be non-existent.

The illustrated UE 101, 102 is one type of an apparatus to which resources on the air interface may be allocated and assigned. The UE 101, 102 may also be called a wireless communication device, a subscriber unit, a mobile station, a remote terminal, an access terminal, a user terminal, a terminal device, or a user device, just to mention but a few names. The UE 101, 102 may be a computing device operating with or without a subscriber identification module (SIM), including, but not limited to, the following types of computing devices: a mobile phone, a smartphone, a personal digital assistant (PDA), a handset, a computing device comprising a wireless modem (e.g., an alarm or measurement device, etc.), a laptop computer, a desktop computer, a tablet, a game console, a notebook, a multimedia device, a reduced capability (RedCap) device, a wearable device (e.g., a watch, earphones or eyeglasses) with radio parts, a household appliance with radio parts, a sensor comprising a wireless modem, or a computing device comprising a wireless modem integrated in a vehicle.

Any feature described herein with a UE may also be implemented with a corresponding apparatus, such as a relay node. An example of such a relay node may be a layer 3 relay (self-backhauling relay) towards the access node. The self-backhauling relay node may also be called an integrated access and backhaul (IAB) node. The IAB node may comprise two logical parts: a mobile termination (MT) part, which takes care of the backhaul link(s) (i.e., link(s) between IAB node and a donor node, also known as a parent node) and a distributed unit (DU) part, which takes care of the access link(s), i.e., child link(s) between the IAB node and UE(s), and/or between the IAB node and other IAB nodes (multi-hop scenario).

Another example of such a relay node may be a layer 1 relay called a repeater. The repeater may amplify a signal received from an access node and forward it to a UE, and/or amplify a signal received from the UE and forward it to the access node.

It should be appreciated that the UE 101, 102 may also be a nearly exclusive uplink-only device, of which an example may be a camera or video camera loading images or video clips to a network. The UE 101, 102 may also be a device having capability to operate in an Internet of Things (IoT) network, which is a scenario in which objects may be provided with the ability to transfer data over a network without requiring human-to-human or human-to-computer interaction.

The wireless communication network may also be able to support the usage of cloud services. For example, at least part of core network operations may be carried out as a cloud service (this is depicted in Fig. 1 by "cloud" 114). The UE 101, 102 may also utilize the cloud 114. In some applications, the computation for a given UE may be carried out in the cloud 114 or in another UE.

The wireless communication network may also comprise a central control entity, such as a network management system (NMS), or the like. The NMS is a centralized suite of software and hardware used to monitor, control, and administer the network infrastructure. The NMS is responsible for a wide range of tasks such as fault management, configuration management, security management, performance management, and accounting management. The NMS enables network operators to efficiently manage and optimize network resources, ensuring that the network delivers high performance, reliability, and security.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question may have inherent mobility, are a subcategory of cyber-physical systems. Examples of mobile physical systems include mobile robotics and electronics transported by humans or animals.

5G enables using multiple-input and multiple-output (MIMO) antennas in the access node 104 and/or the UE 101, 102, many more base stations or access nodes than an LTE network (a so-called small cell concept), including macro sites operating in co-operation with smaller stations and employing a variety of radio technologies depending on service needs, use cases and/or spectrum available. 5G wireless communication networks may support a wide range of use cases and related applications including video streaming, augmented reality, different ways of data sharing and various forms of machine-type applications, such as (massive) machine-type communications (mMTC), including vehicular safety, different sensors and real-time control.

In 5G wireless communication networks, access nodes and/or UEs may have multiple radio interfaces, such as below 6 gigahertz (GHz), centimeter wave (cmWave) and millimeter wave (mmWave), and also being integrable with legacy radio access technologies, such as LTE. Integration with LTE may be implemented, for example, as a system, where macro coverage may be provided by LTE, and 5G radio interface access may come from small cells by aggregation to LTE. In other words, a 5G wireless communication network may support both inter-RAT operability (such as interoperability between LTE and 5G) and inter-RI operability (inter-radio interface operability, such as between below 6GHz, cmWave, and mmWave).

5G wireless communication networks may also apply network slicing, in which multiple independent and dedicated virtual sub-networks (network instances) may be created within the same physical infrastructure to run services that have different requirements on latency, reliability, throughput and mobility.

5G may enable analytics and knowledge generation to occur at the source of the data. This approach may involve leveraging resources that may not be continuously connected to a network, such as laptops, smartphones, tablets and sensors. Multi-access edge computing (MEC) may provide a distributed computing environment for application and service hosting. It may also have the ability to store and process content in close proximity to cellular subscribers for faster response time. Edge computing may cover a wide range of technologies, such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

In one embodiment, an access node 104 may comprise: a radio unit (RU) 103 comprising a radio transceiver (TRX), i.e., a transmitter (Tx) and a receiver (Rx); one or more distributed units (DUs) 105 that may be used for the so-called Layer 1 (L1) processing and real-time Layer 2 (L2) processing; and a central unit (CU) 108 (also known as a centralized unit) that may be used for non-real-time L2 and Layer 3 (L3) processing. The CU 108 may be connected to the one or more DUs 105 for example via an F1 interface. Such an embodiment of the access node 104 may enable the centralization of CUs relative to the cell sites and DUs, whereas DUs may be more distributed and may even remain at cell sites. The CU and DU together may also be referred to as baseband or a baseband unit (BBU). The CU and DU may also be comprised in a radio access point (RAP).

The CU 108 may be a logical node hosting radio resource control (RRC), service data adaptation protocol (SDAP) and/or packet data convergence protocol (PDCP), of the NR protocol stack for an access node 104. The CU 108 may comprise a control plane (CU-CP), which may be a logical node hosting the RRC and the control plane part of the PDCP protocol of the NR protocol stack for the access node 104. The CU 108 may further comprise a user plane (CU-UP), which may be a logical node hosting the user plane part of the PDCP protocol and the SDAP protocol of the CU for the access node 104.

The DU 105 may be a logical node hosting radio link control (RLC), medium access control (MAC) and/or physical (PHY) layers of the NR protocol stack for the access node 104. The operations of the DU 105 may be at least partly controlled by the CU 108. It should also be understood that the distribution of functions between the DU 105 and the CU 108 may vary depending on the implementation.

Cloud computing systems may also be used to provide the CU 108 and/or DU 105. A CU provided by a cloud computing system may be referred to as a virtualized CU (vCU). In addition to the vCU, there may also be a virtualized DU (vDU) provided by a cloud computing system. Furthermore, there may also be a combination, where the DU may be implemented on so-called bare metal solutions, for example application-specific integrated circuit (ASIC) or customer-specific standard product (CSSP) system-on-a-chip (SoC).

Edge cloud may be brought into the radio access network by utilizing network function virtualization (NFV) and software defined networking (SDN). Using edge cloud may mean access node operations to be carried out, at least partly, in a computing system operationally coupled to a remote radio head (RRH) or a radio unit (RU) 103 of an access node 104. It is also possible that access node operations may be performed on a distributed computing system or a cloud computing system located at the access node 104. Application of cloud RAN architecture enables RAN real-time functions being carried out at the radio access network (e.g., in a DU 105), and non-real-time functions being carried out in a centralized manner (e.g., in a CU 108).

5G (or new radio, NR) wireless communication networks may support multiple hierarchies, where multi-access edge computing (MEC) servers may be placed between the core network 112 and the access node 104. It should be appreciated that MEC may be applied in LTE wireless communication networks as well.

A 5G wireless communication network ("5G network") may also comprise a non-terrestrial communication network, such as a satellite communication network, to enhance or complement the coverage of the 5G radio access network. For example, satellite communication may support the transfer of data between the 5G radio access network and the core network 112, enabling more extensive network coverage. Possible use cases may include: providing service continuity for machine-to-machine (M2M) or Internet of Things (IoT) devices or for passengers on board of vehicles, or ensuring service availability for critical communications, and future railway, maritime, or aeronautical communications. Satellite communication may utilize geostationary earth orbit (GEO) satellite systems, but also low earth orbit (LEO) satellite systems, such as mega-constellations (i.e., systems in which hundreds of (nano)satellites are deployed). Alternatively, the satellites may be an airborne devices, such as an unmanned aerial vehicle (UAV), or a high-altitude platform system (HAPS). A given satellite 106 may provide communication services on Earth via one or more satellite beams. The one or more satellite beams create one or more- cells over a given service area that may be bounded by the field of view of the satellite 106.

It is obvious for a person skilled in the art that the access node 104 depicted in Fig. 1 is just an example of a part of a radio access network, and in practice the radio access network may comprise a plurality of access nodes 104, the UEs 101, 102 may have access to a plurality of radio cells, and the radio access network may also comprise other apparatuses, such as physical layer relay access nodes or other entities. At least one of the access nodes may be a Home eNodeB or a Home gNodeB. A Home gNodeB or a Home eNodeB is a type of access node that may be used to provide indoor coverage inside a home, office, or other indoor environment.

Additionally, in a geographical area of a radio access network, a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The access node(s) 104 of Fig. 1 may provide any kind of these cells. A cellular radio network may be implemented as a multilayer access networks including several kinds of radio cells. In multilayer access networks, one access node may provide one kind of a radio cell or radio cells, and thus a plurality of access nodes may be needed to provide such a multilayer access network.

For fulfilling the need for improving performance of radio access networks, the concept of "plug-and-play" access nodes may be introduced. A radio access network, which may be able to use "plug-and-play" access nodes, may include, in addition to Home eNodeBs or Home gNodeBs, a Home Node B gateway (HNB-GW) (not shown in Fig. 1). An HNB-GW, which may be installed within an operator's radio access network, may aggregate traffic from a large number of Home eNodeBs or Home gNodeBs back to a core network 112 of the operator.

6G wireless communication networks are expected to adopt flexible decentralized and/or distributed computing systems and architecture and ubiquitous computing, with local spectrum licensing, spectrum sharing, infrastructure sharing, and intelligent automated management underpinned by mobile edge computing, artificial intelligence, short-packet communication and blockchain technologies. Key features of 6G may include intelligent connected management and control functions, programmability, integrated sensing and communication, reduction of energy footprint, trustworthy infrastructure, scalability and affordability. In addition to these, 6G is also targeting new use cases covering the integration of localization and sensing capabilities into system definition to unifying user experience across physical and digital worlds.

It is envisaged that 7G, which will succeed the 5G and 6G technologies, will be able to satisfy the requirements of extremely high bandwidth, almost zero latency, and universal integration.

The testing environment 120 for network performance testing is configured to cover, for a wide variety of configurations, e.g. operator-specific configurations, in the more and more complex and dynamic wireless networks, a vast number of different topics or aspects to find e.g. corner faults or to test e.g. an update to a network configuration before it is implemented in a wireless network. For example, for a radio access network testing, the testing environment 120 may be configured for robustness, key performance indicator (KPI) benchmarking, stability testing, capacity testing, radio resource management (RRM) algorithm performance testing etc. to test, for example, a wide variety of operator-specific configurations. Hence, the testing environment may serve as a gating mechanism before updates are released to one or more existing networks.

The testing environment 120, comprises at least a test system 121, and a test platform 122, which may be called also a testing tool system. The test platform 122 comprises at least an automation and data collection (A&D) part 123, a test agent (TA) part 124, and a test execution (TE) part 125. The test execution part 125 comprises one or more user interfaces (UI), including graphical user interfaces, for providing inputs to trigger testing, for example. The test agent part 124, as will be described in more detail below, provides a performance testing capabilities to enable testing by vast and constantly evolving state space, encompassing various user equipment configurations, channel conditions, and base station parameters, for example. Shortly said, based on a test task, or goal, given by a user via the text execution part 124, the test agent 123 inputs via the automation and data collection part 122, one or more actions to the test system 121 and process the feedback received via the automation and data collection part 122, as will be described in more detail below.

The test platform 122 may further comprise a message broker (MB) part 126, or a message proxy system, between the automation and data collection part 123 and the test agent part 124. The message broker part allows testing between different test systems, without need to adjust the functionality of the test agent 124 per a test system. For example, the message broker part 126 enables to keep the test agent part 124 functioning independent and agnostic to the interface between the payload generating part 121-A and the serving part 121-B in the test system 121. For example, the message broker part 126 may translate request and response messages between the test agent part 124 and the test system 121, i.e. the payload generating part 121-A and the serving part 121-B. The message broker part 126 may perform also other tasks, for example end point configuration. In other words, the message broker part may handle interface mapping with source and target entities.

Further, in the example of Fig. 1, the test agent part 124 and the test execution part 125 are connected to a data storage 130. The data storage 130 may be a historian comprising network performance values measured in a real network, for example in the radio access network 104. The data storage 130 may comprise, for example per an operator of a real network, e.g. the radio access network 104, an operator configuration, for example control parameters, to be used in the test system 121, either in one of the parts or in both parts, when the test is for the operator network (real network of the operator, or shortly real network). The data storage 130 may also comprise, per an operator of a real network, one or more historical datasets of N tested data samples. A data sample may represent a tuple of experienced configuration parameters and network performance counters, or shortly performance counters. The data storage may also comprise other data, such as a policy and corresponding state. It should be appreciated that even though the data storage is depicted as one entity, there may be any number of data storages. Further, the data storage 130 may be any kind of conventional or future data repository, including distributed, or centralized, or decentralized storing of data, managed by any suitable management system. Details of the implementation of the data storage 130, the manner how data is stored, retrieved and updated, are irrelevant to the actual testing, and hence not described in more detail herein.

The test system 121 comprises a payload generating part 121-A and a serving part 121-B, the parts being configured to communicate with each other and being accessible to the automation and data collection part 123. The payload generating part and the serving part mimic an existing network, or a sub-network. In the non-limiting example illustrated in Fig. 1, the test set up is for performance testing in 5G NR base stations.

The payload generating part 121-A comprises a plurality of UE simulators (UE#1 to UE#K) to model various traffic profiles and simulate mass events, a channel emulator emulating propagation of radio traffic, and a payload emulator to emulate network traffic. The UE simulators have capability to push base stations to their operational limits. The network environment mimicked in the payload generating part may be changed by changing a set of payload related test configurations, such as traffic pattern, user profile, user mobility classes, and propagation model. Further, it should be appreciated that also real devices may be deployed in the payload generating part.

The serving part 121-B comprises network elements, that may be real network elements or real network devices, such as 1 to N radio units (RU), 1 to M distributed units (DU) and a central unit CU. Naturally it may comprise other network elements, for example an edge server. The serving part 121-B receives payload or traffic generated by the payload generating part 121-A, serves the payload or traffic, measures corresponding network performance counter values, or values to be used for calculating network performance counter values, and may collect other information, such as alarms and log information. The network performance counter values may be used for reenacting a state of a real network. The serving part may naturally receive some input also from the test platform. The network environment mimicked in the serving part 121-B may be changed by changing a set of serving related configurations, such as configurations related to frame formats, scheduling, beamforming, deployment, radio resource management, and resource allocation. Further, it should be appreciated that also simulators and/or emulators may be deployed in the serving part.

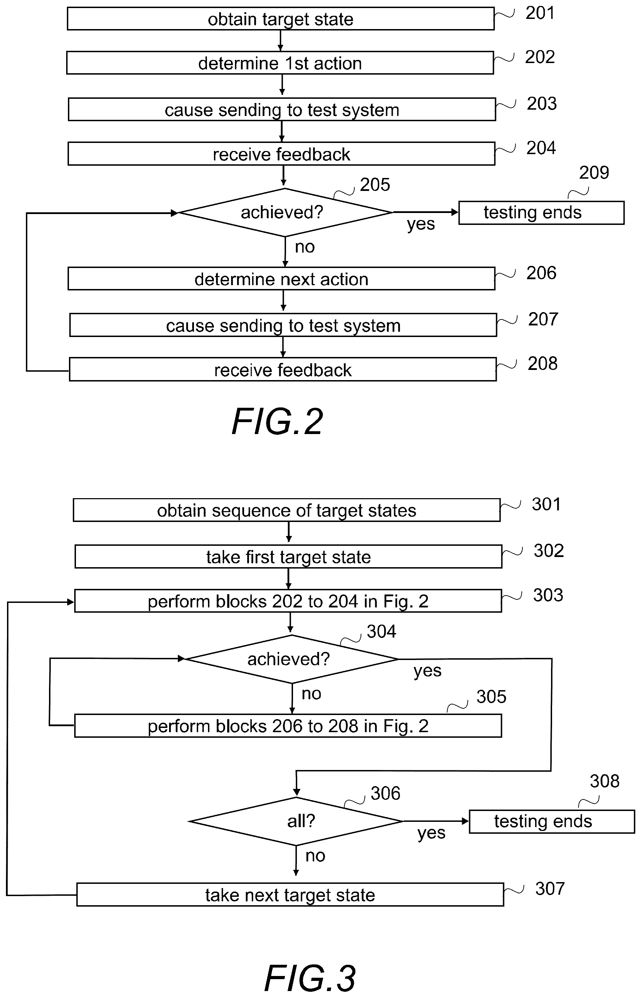

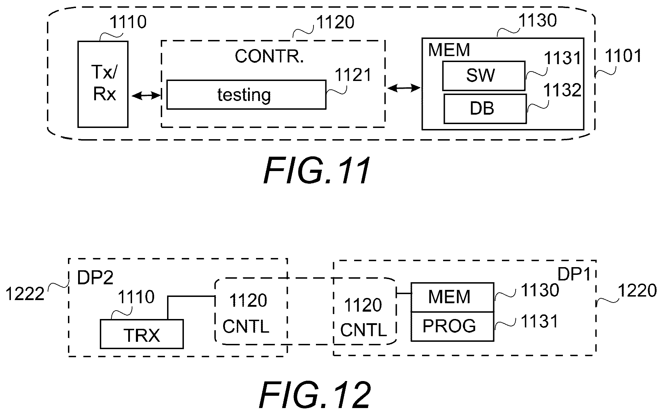

Fig. 2 is a flowchart illustrating a non-limiting example of a method, e.g. a computer implemented method, for testing. The method of Fig. 2 may be performed by an apparatus depicted in Fig. 11. For example, the apparatus may be, or comprise, or be comprised in the test agent part in the test platform. The apparatus may comprise at least one processor, and at least one memory storing instructions that, when executed by the at least one processor, cause the apparatus at least to perform the method of Fig. 2.

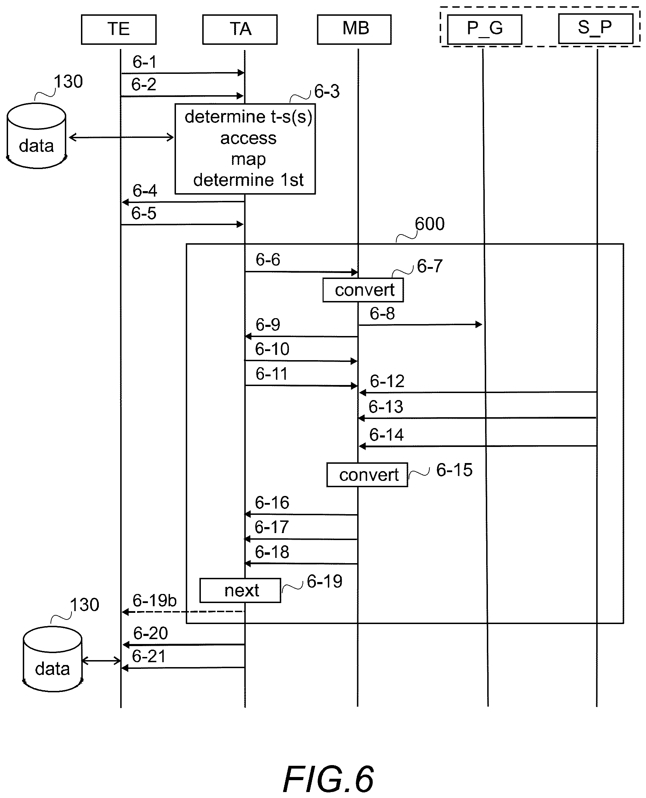

Referring to Fig. 2, at least one target state for a wireless network is obtained (block 201). It should be appreciated that the the target state does not necessarily have to be a performance requirement; it can be any state of interest that warrants further investigation or exploration within a specific operational context. Different examples how the at least one target state may be obtained will be described below, for example with any of Fig. 6 to Fig. 10. For the sake of clarity of description, in the illustrated example of Fig. 2 it is assumed that one target state is obtained in block 201. Then a first action to be performed to achieve the target state is determined (block 202). Different examples how the first action may be determined will be described below, for example with any of Fig. 6 to Fig. 10. Sending the first action to a test system, for example to the test system of Fig. 1 comprising the payload generating part and the serving part comprising network elements, the payload generating part generating to the network elements payload, is caused (block 203). Feedback is received (block 204) from the test system. The feedback comprises at least network performance counter values of network performance counters, the network performance counter values being collected on the serving part under the payload and representing a current state of the serving part. Then it is determined (block 205), based at least on the network performance counter values received, whether the serving part achieved the target state. When the target state is not achieved (block 205: no), a next action to be performed to achieve the target state is determined (block 206), based on at least a difference between the target state and a state determined using at least the network performance counter values received. Sending the next action to the test system is caused (block 207), and feedback on the next action is received (block 208). Then the process proceeds to block 205 to determine, whether the target state is achieved. The determining the next action and causing sending the next action to the test system, and naturally receiving the feedback, is repeated until the target state is achieved. The feedback may be received by requesting the feedback at predetermined time intervals. When the target state is achieved (block 205: yes), the testing ends (block 209).

Even though not illustrated in Fig. 2, the testing may end when feedback indicating a malfunction is received, or when a predetermined time has lapsed after causing sending a corresponding first action.

It should be appreciated that any of the first action and/or next action(s) may comprise one or more components, or sub-actions, and they may be sent simultaneously or in a sequential manner.

Fig. 3 is a flowchart illustrating another non-limiting example of a method, e.g. a computer implemented method, for testing. The method of Fig. 3 may be performed by an apparatus depicted in Fig. 11. For example, the apparatus may be, or comprise, or be comprised in the test agent part in the test platform. The apparatus may comprise at least one processor, and at least one memory storing instructions that, when executed by the at least one processor, cause the apparatus at least to perform the method of Fig. 3. The method of Fig. 3 is similar to the method of Fig. 2, the difference being that in the method of Fig. 3 more than one target state is processed.

Referring to Fig. 3, a sequence of target states for a wireless network is obtained (block 301). Different examples how the at least one target state is obtained will be described below, for example with any of Fig. 6 to Fig. 10. In the illustrated example of Fig. 3 it is assumed that the sequence of target states comprises two or more target states, that are processed one by one according to the sequence is obtained in block 301. Hence, the first target state is taken (block 302) and the process described above with blocks 202 to 204 in Fig. 2 is performed (block 303). Then it is determined (block 304), whether the target state is achieved. (Block 304 corresponds to block 205). When the target state is not achieved (block 304: no), the process described above with blocks 206 to 208 in Fig. 2 is performed (block 305), and the process returns to block 304 to determine, whether the target state is achieved. When the target state is achieved (block 304: yes), it is determined (block 306), whether all target states in the sequence have been achieved, or processed. If not (block 306: no), a next target state in the sequence is taken (block 307) and the process returns to block 303. When all target states have been achieved (block 306: yes), or processed, the testing ends (block 308).

In an implementation of the method of Fig. 3, when feedback indicating a malfunction is received, the process may continue to block 306 to determine whether all target states in the sequence have been achieved, or processed. In another implementation of the method of Fig. 3, when feedback indicating a malfunction is received, the testing may end (process may continue directly to block 308).

Even though not illustrated, the method of Fig. 3 may include monitoring duration of the process. For example, the method may include monitoring time per a target state and when a predetermined time has lapsed after causing sending a corresponding first action, the process discontinues to try to achieve the target state in question and may continue to block 306 to determine whether all target states in the sequence have been achieved, or processed. The method may include monitoring time for the sequence of target states, and when a predetermined time has lapsed after causing sending a first action to achieve the first target state in the sequence, the process discontinues to try to achieve the target state currently under process and the testing ends.

The above methods may be implemented using artificial intelligence machine learning techniques, for example using in the test agent part one or more reinforcement learning models, for example models using hierarchical reinforcement learning, trajectory-based reinforcement learning, and/or decision transformer. A reinforcement learning model may be used to iteratively achieve the target state. The use of a reinforcement model also enables to achieve a sequence of states in a controlled manner, by learning optimal policies for state transitions. The reinforcement learning may be abstracted as a sequence modeling problem and train an autoregressive model on sequences of states *s*, actions *a*, and rewards r. This results in a trajectory representation that is well-suited for autoregressive training for a trajectory (*r*₀, *a*₀, *s*₀, *r*₁, *a*₁, *s*₁, *.*.. , *r_{T}, a_{T}, s_{T}*).

Because the state (target state) and actions may involve continuous variables, and they may have large spaces, deep reinforcement learning models may be used. A non-limiting list includes classical deep reinforcement learning models such as deep Q networks, actor critic-based algorithms and its successors such as soft actor critic and deep deterministic policy gradient (DDPG), to which a state, action and reward can be defined, for example as will be described below with different non-limiting case examples illustrated in Fig. 6 to Fig. 10.

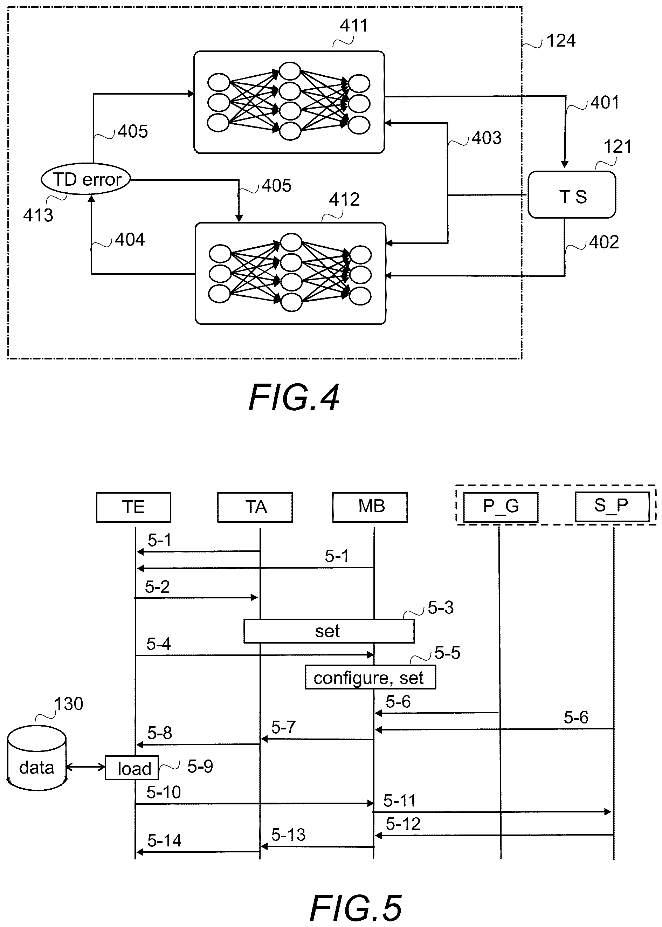

Fig. 4 illustrates an example of actor critic deep reinforcement learning based test agent part for network performance testing.

Referring to Fig. 4, the test agent part 124 comprises a base model 411 for actor and a base model 412 for critic, where the base models for actor and critic are both Multilayer Perceptrons, which comprise three or more layers (an input and an output layer with one or more hidden layers) of nonlinearly-activating nodes. The base model 411 for actor inputs one or more actions 401, for example test configurations, to the test system 121, the test system being described above with Fig. 1. The one or more actions are outputs of the base model 411 for actor.

Network performance counter values collected in the test system 121 are used to define a state that is used as reference input 403 to the base models 411 and 412 to learn an optimal policy to achieve a target state, or a sequence of successive states leading to a target state, that the investigated/tested real network may transition through. Any arbitrary network state may be used as a target state. Further, rewards 402 are input to the base model 412 for critic. The rewards that are calculated (computed) based on distance between observed states 403 and the target state, may be used to determine, whether the target state is achieved. A reward may be seen as a negative distance or similarity between states and target states. In other words, because the objective is to achieve a target state, the instantaneous reward *rₜ* can be defined based on the distance or similarity measure between the current state *sₜ* and the target state *s*,* e.g., *rₜ* = *-d*(*sₜ, s*),* where *d*(·,·) can be any distance function, such as Euclidean distance or cosine similarity. In case the state is normalized, a negative distance between the normalized state and target state can be used.

If the objective is to achieve a sequence of N states to reach the target state, the reward can be designed with various strategies to automatically tune configuration parameters for testing. For example, cumulative step reward of a trajectory ${r}_{t} = - {\sum }_{i = t - N + 1}^{t} d \left({s}_{i}, {s}_{i}^{∗}\right)$ , where ${s}_{i}^{∗}$ is the desired state at the i-th step, may be used as a tuning strategy. Alternative options include sequence alignment reward such as dynamic time warping that measures the similarity between two sequences, and action sequence cumulative reward that includes also the distance between the sequence of derived actions ${r}_{t} = - {\sum }_{i = t - N + 1}^{t} d \left({a}_{i}, {a}_{i}^{∗}\right)$, where ${a}_{i}^{∗}$ denotes the experienced target action at the i-th step in the sequence to reenact. It should be noted that a final reward function, which is used in training is not entirely based on action but it may be one of the options above, or a combination of any of the above options, which can be added on top of other rewards. Further, it should be noted that the computed reward can be further normalized to defined bounded region to improve the stability of reinforcement model training. Since the reward is computed focusing on the difference between the state achieved and the target state, not using quality of service requirements to compute the reward, it is possible to explore states, such as failure modes, which may require deeper analysis.

A temporal difference (TD) error block 413 determines an error of an output 404 of the base model 412 for critic, and the temporal error 405 is input to both base models 411, 412, to be included in corresponding loss functions for training the base models 411, 412 .

When the objective of the testing is to reenact a sequence of states, deep reinforcement learning models equipped with sequence modeling may be used. For example, both base models 411 and 412 may be replaced by sequence models, such as long short-term memory, recurrent neural network, or transformers, for example a decision transformer based on an autoregressive mode, in which each input may undergo modality-specific encoding and then position encodings, ending up to a stacked input sequence layer, which is followed by a transformer layer, to which also attention mask is input. The next layer after the transformer layer in the decision transformer may be an action prediction. States, actions, and rewards may be fed into the model (input layer), and the model predicts the next actions autoregressively. A sequence length of N past time steps of state, action [r_{t-N}, s_{t-N}, a_{t-N}, ..., r_{t-1}, s_{t-1}, a_{t-1}] can be used to predict the next action a_t.

A non-limiting list of network performance counters whose values may be used by the test agent part to represent a state to deduce actions include average active UE in uplink, average active UE in downlink, average voice over NR users, average UE attach to network, average user throughput in uplink, average user throughput in downlink, average active uplink cell throughput, average active downlink cell throughput, and average successful intra DU handovers. The number of network performance counters depends on serving part of the test system, and the number is often very large. The network performance counters may be generated in the serving part periodically, with a first periodicity and/or network performance counter values may be collected periodically, with a second periodicity, which may be the same as the first periodicity or different from the first periodicity.

A non-limiting list of examples of actions that may be invoked by the test agent part to change a state on a serving part of the test system, or in a network element, e.g. a base station, in the serving part of the test system, include UE attach/detach, UE attach/detach duration, UE voice traffic start /stop, UE data traffic start/stop, UE speed/mobility Control, UE hybrid automatic repeat request (HARQ) ACK/NACK control, UE cyclic redundance check (CRC) corruption, UE channel quality indicator (CQI) values, UE sounding reference signal (SRS) power control, UE physical uplink shared channel (PUSCH) power control and UE physical random access channel (PRACH) power control. It should be noted that on the serving part of the test system bad radio condition or varying channel condition may be inferred by network performance counters like average modulation and coding scheme (MCS) in uplink/downlink, radio link control protocol data unit (RLC PDU) retransmission rate, uplink/downlink channel block error rate (BLER) counters, and knowing distribution of these among UE/cell level. It should be appreciated that the test agent part may learn based on such counters to trigger actions to emulate channel conditions, meaning that an action space would list all possible actions which can trigger changes in radio/channel conditions.

A highly simplified example is given using table 1, table 2, and table 3. Table 1 illustrates a state space, i.e. network performance counters, whose values are collected on the serving part and received in the test agent part for continuous time points. All counters and corresponding values at a time point is considered belong to a same state. Table 2 illustrates a supported action space. The supported action space may be determined by test system configuration capability. For example, some vendors whose systems/devices/simulators/emulators are used in the test system or are to be tested may support more configurations than some other vendors.. For each state, an action may be derived using reinforcement learning method of the test agent part. Table 3 illustrates reward function: positive reward for moving closer to the target state and negative reward for moving away from the target state. In the example, a goal may be set as a state space at a time point where performance indicator values on a target state, which is selected from the state space, meets the goal, for example "achieve target uplink throughput 800 Mbps " and "maintain target number of active UEs 30".

**Table 1**

| time | counter | Value |
|---|---|---|
| Time point X | active UE in a cell | 30 |
| Time point X | UL cell throughput | 800 |
| ... | ... | ... |
| Time point Y, etc. | active UE in a cell, etc. | ... |

**Table 2**

| action ID | Action |
|---|---|
| 0 | increment UE |
| 1 | decrement UE |
| 2 | increase UL traffic |
| 3 | decrease UL traffic |
| 4 | ... |
| ... | ... |

**Table 3**

| condition | Reward |
|---|---|
| counter Exact throughput match | +100 |
| counter Distance within 10 units | +50 |
| counter Distance within 50 units | +10 |
| otherwise | -distance |

In the examples illustrated in Fig. 5 to Fig. 10 different non-limiting high level information exchanges between a test execution part, a test agent part and the test system are described for different use case examples, assuming that a message broker part is involved and that actions, e.g. configuration changes, are sent to the payload generating part. However, it is a straightforward task for one skilled in the art to implement the examples when one or more actions are sent to the serving part and/or the message broker part is not involved. In the examples below, the test execution part TE is called simply test executor, the test agent part TA is called simply the test agent, and the message broker part MB is called simply the message broker. Furthermore, even though illustrated in the examples below as one action sent to the test system, a set of actions may be sent to the test system before feedback is collected, i.e. one action may comprise one or more components. Further, user inputs to the test executor and displaying results to user by the test executor are not separately mentioned.

Fig. 5 illustrates an example how to set up a test, or more precisely how the testing environment is set up.

Referring to Fig. 5, the test executor gets, or receives (messages 5-1) ready status of the test agent and the message broker. Then the test executor configures the test agent and the message broker with initial configuration by sending (message 5-2) a configuration for the test agent and the message broker to the test agent. The test agent applies the configuration and may set (block 5-3) in the test agent and/or in the message broker, one or more timers for control of actions, supported action list by the payload generating part (P_G), states and observation management, for example. Further, the test executor configures the message broker for interface to the test system by sending (message 5-4) interface setting for the payload generating part and the serving part (S_P). The message broker may configure (block 5-5) an endpoint of the payload generating part and an endpoint of the serving part. Further, the message broker may set (block 5-5) an interface mapper to process requests and to handle responses. The payload generating part and the serving part both send (messages 5-6) get ready status. When the message broker receives the get ready status messages, it sends (message 5-7) "receive environment ready" information to the test agent, which in turn sends (message 5-8) a ready message to the test executor. This means that the testing environment is in a ready state and all nodes in testing environment are configured with endpoint connected.

Then the test executor loads (block 5-9), from the data storage 130, an operator configuration, e.g. control parameters, for the serving part. A non-limiting list of examples of the control parameters include antenna parameters, power control parameters, scheduling protocols, and data available in the serving part. The control parameters, and other configuration, if any, for the serving part, is sent (message 5-10) to the message broker, which then sends (message 5-11) instructions to commission the serving part with the control parameters and with the other configuration, if such is received in message 5-11, to the serving part. The serving part will be automatically commissioned correspondingly, and in the illustrated example it is assumed that the commissioning succeeds, and the serving part sends (message 5-12) an indication that the serving part is ready to the message broker, which sends (message 5-13) corresponding information to the test agent. The test agent sends (message 5-14) an indication of success to the test executor. The testing environment is now setup and ready for learning or execution.

Fig. 6 illustrates an example of a target state learning in a mode which may be called an auto mode. In the illustrated example, it is assumed that the test agent has access to a historical dataset of tested data samples in the data storage 130.

Referring to Fig. 6, the test executor indicates (message 6-1) to the test agent that the testing mode is auto and sends (message 6-2) to the test agent one or more lists of network performance counter values to be used to determine corresponding one or more states.

The test agent obtains a target state by taking one of the lists of network performance counter values and by using the network performance counter values in the list to determine (block 6-3) the target state. It should be appreciated that more than one target state may be determined, for example as many as there are lists. However, for the sake of clarity, in the example it is assumed that one target state is determined. Then the test agent accesses (block 6-3) the historical dataset comprising actions with associated historical states as the tested data samples, maps (block 6-3) the target state to the closest historical state in the historical dataset, and determines (block 6-3) an action associated with the closest historical state to be a first action to be performed to achieve the target state. Then the test agent indicates (message 6-4) to the test executor that the test agent is ready for action. The test executor then sends (message 6-5) instructions to start learning a policy to achieve the target state.

Block 600 indicates information exchange and functionality that is performed repeatedly until one of the following events occur: the target state is achieved, a malfunction is detected, or a predetermined time has lapsed after causing sending a corresponding first action.

The test agent sends (message 6-6) an action towards the payload generating part. When block 600 is entered, the action is the first action, otherwise it is a next action. Message 6-6 may be "set action on P_G". The message broker converts (block 6-7) the action to be according to a communication protocol used in the payload generating part, and sends the action (one or more messages 6-8, for example 1 to K messages) to the payload generating part, to be executed therein, and an indication (message 6-9) indicating success to the test agent.

In the illustrated example of Fig. 6, after a predetermined time has lapsed from the sending the action to the message broker, the test agent requests (messages 6-10, 6-11) feedback via the message broker. The test agent may request (message 6-10) to get network performance counter values. The test agent may further request (message 6-11) logs generated by network elements in the serving part and/or information on alarms.

The message broker then retrieves the feedback from the serving part using communication protocol used in the serving part. It should be appreciated that in another implementation, the message broker may be configured to monitor time to determine when to retrieve the feedback. In the illustrated example, the message broker gets (message 6-12) network performance counter values generated and collected on the serving part under the payload and representing a current state of the serving part, gets (message 6-13) alarm information, and gets (message 6-14) logs generated. The message broker then postprocesses the feedback, the postprocessing including at least converting (block 6-15) the feedback to be according to the protocol used by the test agent. The postprocessing may include filtering the feedback. The postprocessed feedback (messages 6-16, 6-17, 6-18) is sent to the test agent.

The test agent receives network performance counter values (message 6-16), information on alarms (message 6-17), for example indication of alarms, and logs (message 6-18), for example as fault indication(s) that are results of the postprocessing.

The test agent then processes (block 6-19) the feedback to determine whether a malfunction is detected or whether the target state is achieved. The malfunction may be determined using the indication of alarms and/or fault indications, i.e. using information on alarms and/or logs. Should the malfunction being detected, testing ends, and report the malfunction is reported (message 6-19b).

If no malfunction is detected, the test agent determines (block 6-19), based at least on the network performance counter values received, whether the serving part achieved the target state. When the target state is not achieved, the test agent determines (block 6-19) based on at least a difference between the target state and a state determined using at least the network performance counter values received, a next action to be performed to achieve the target state. The test agent then sends (message 6-6) the next action to the test system via the message broker.

When the target state is achieved, the test agent stores (message 6-20) a policy, or an updated policy, for the target state to the data storage 130, and in the illustrated example stores (message 6-21) also target state details. The policy is a mapping from states to actions. For example, for stochastic policy P(a|s) the policy defines a distribution over action *a* conditioned by a given state s. The policy defines how the test agent selects action based on a current state of the test system.

The above process may be described also as follows, when the test agent has access to a historical dataset of N tested data samples, wherein each data sample represents a tuple of experienced configuration parameters and performance counters (PCs), or more precisely their values. These samples are collected from previous testing experiments conducted in the testing environment. The dataset is denoted as: $X = \left\{\left({a}_{n}, {s}_{n}\right):n=1,…,N\right\} ,$ where **a**ₙ denotes the executed action (namely, configuration parameters) in the n-th sample, while **s***ₙ* denotes the experienced state (namely, PCs), as a reaction to **a**ₙ.

The TE forwards to the TA a required set 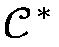 of M instances of PCs that need to be reenacted in the testing environment (note: the test executor can request multiple states to be reenacted), denoted by ${C}^{∗} = \left\{{s}_{m}:m=1,…,M\right\} .$

Each requested states **s***ₘ* ∈ 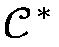 is assumed to belong to ${ℝ}^{K}$, encompassing all *K* types of PCs, e.g., average active UE in uplink/downlink, average UE attached to network, etc.

For each requested instance **s***ₘ* ∈ 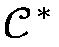 :
▪ the closest matching historical state **s***ₙ* is identified from historical set X using the following criterion: ${n}^{∗} \left(m\right) = {argmin}_{n = 1 , … , N} D \left({s}_{n}, {s}_{m}\right)$
where *D*(·,·) is a distance function that measures the difference between two states.
▪ the *n**(*m*)-th state **s**_{*n**(*m*)} is selected as the closest match to the requested state **s***ₘ*.
▪ the corresponding action **a**_{*n**(*m*)}, which was previously associated with **s**_{*n**(*m*)}, is selected as the initial action, i.e. as the first action, for the start, which may be called a cold start.
▪ after executing the cold start, the reinforcement learning process begins, iterating until convergence to the desired state **s***ₘ*.

With the auto mode, an arbitrary network state as a target state can be traced back, without expert information on configurations for example in the payload generation part, by using network performance counter values measured from a real network as input data for the test agent part, which iteratively adapts testing configurations for the payload generating part, ensuring that network performance counter values collected by the serving part in the test system closely align with those measured from the real network and defining the target state.

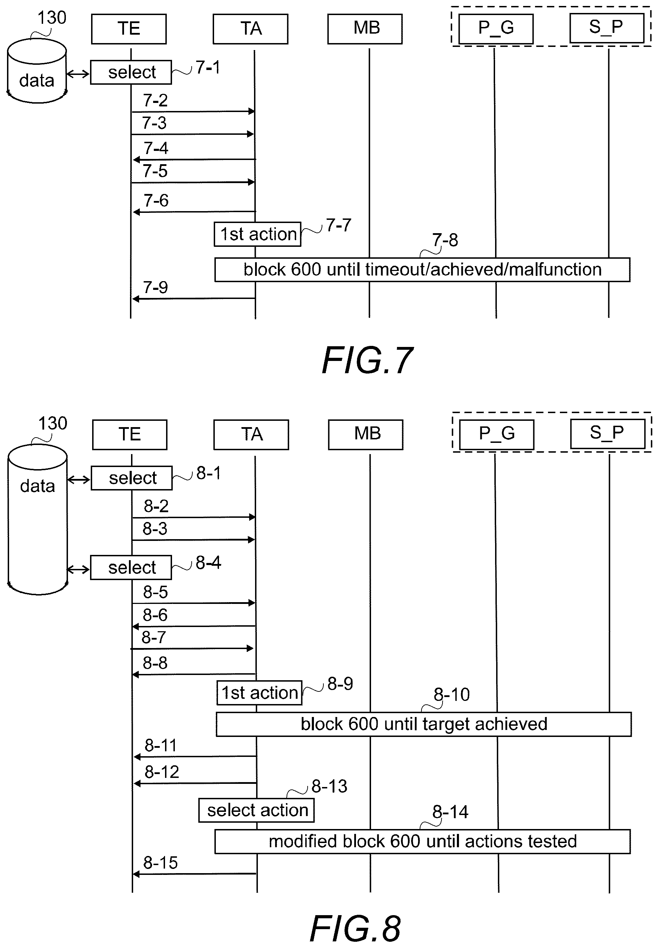

Fig. 7 illustrates an example of a target state execution. In the illustrated example, it is assumed that the data storage 130 comprises at least one or more stored policies with corresponding associated states, and that the test agent obtains a target state and a policy for the target state by receiving them.

Referring to Fig. 7, the test executor selects (block 7-1) from the data storage one of the stored policies and an associated state, and sends the policy (message 7-2) and the associated state as a target state (message 7-3) to the test agent. When the test agent receives the policy and the target state, it indicates (message 7-4) to the test executor that the test agent is ready for action. The test executor sends instruction (message 7-5) to start the test execution. The test agent starts the execution, informs (message 7-6) the test executor correspondingly (e.g. sending state=started), and determines (block 7-7) the first action based on the target state and the policy.

Then the process described with block 600 in Fig. 6 is repeated (block 7-8) until the target state is achieved, or a malfunction is detected, or a predetermined time has lapsed after the start of the process, whichever occurs first. Within block 600, when a next action is determined, also the policy is used in the determining the next action.

If the process of block 600 ends because the target state is achieved, the test agent reports (message 7-9) that the target state is achieved. The report may also include an updated policy. If the process of block 600 ends because a malfunction is detected, the test agent reports (message 7-9) the detection of the malfunction, possibly indicating cause of the malfunction, and/or a state with associated policy/action in which the malfunction was detected.

As can be seen from the example of Fig. 7, given measured network performance counter values in an existing real network, it is possible to effectively and efficiently achieve the corresponding network states from the test system, without expert information of required configurations.

Fig. 8 illustrates an example of an exploratory testing. In the illustrated example, it is assumed that the data storage 130 comprises at least one or more stored policies with corresponding associated states, and that the test agent obtains a target state and a policy for the target state by receiving them. It should be noted that in the exploratory testing the target state may be a performance requirement or any state of interest that requires further investigation or exploration within a specific operational context.

Referring to Fig. 8, the test executor selects (block 8-1) from the data storage one of the stored policies and an associated state, and sends the policy (message 8-2) and the associated state as a target state (message 8-3) to the test agent. Further, the test executor selects (block 8-4) what to test around the target state by selecting an exploration action space and probability information. For example, the target state may be "UE attach rate = 20 per min, handover rate 30 per min ", and the exploration action space may be "user configured action list {increase UE attach rate from LTE to 5G, increase mass events e.g. paging rate}". In other words, in block 8-4 action(s) for exploratory and a probabilistic measure may be selected. The exploration action space and probability information are sent (message 8-5) to the test agent.The probability information may be a probability table or a probabilistic transition graph. The use of probabilistic transition graph as probability information facilitates in-depth exploration of potentially risky or sensitive states, since the graph may provide insights into a likely evolution of states based on possible actions or configurations, along with their corresponding probabilities. The graph may also proactively highlight future risk-prone or faulty states triggered by specific actions. A detailed probabilistic graph-based data enhances the robustness and reliability of the testing process for the user (for the test executor). For example, when an exploration action space comprises tree actions, the probabilistic graph-based data may comprise following information: At the target state action 1 and action 2 are selectable. When the action 2 is selected, the state will be state 3 with probability 1. When the action 1 is selected, the state will be state 1 with probability 0.7, and state 2 with probability 0.3. The action 3 is selectable at state the state 1, and when the action 3 is selected, the state will be state 4 with probability 1. An unexpected event would be that when action 3 is selected the state would be state 3.

When the test agent has received the policy, the target state, the exploration action space and the probability information, the test agent indicates (message 8-6) to the test executor that the test agent is ready for action. The test executor sends instruction (message 8-7) to start the test execution. The test agent starts the execution, informs (message 8-8) the test executor correspondingly (e.g. sending action in progress), and determines (block 8-9) the first action based on the target state and the policy.

Then the process described with block 600 in Fig. 6 is repeated (block 8-10) until the target state is achieved, or a malfunction is detected, or a predetermined time has lapsed after the start of the process, whichever occurs first. Within block 600, when a next action is determined, also the policy is used in the determining the next action.

In the illustrated example, it is assumed that the process of block 600 ends because the target state is achieved, the test agent reports (message 8-11) that the target state is achieved, and informs (message 8-12) that the exploratory test is now in progress.

The test agent selects (block 8-13), using the probability information, an untested action within the exploration action space to an action to be tested, and then a process, which is a modified process described with block 600 in Fig. 6 is repeated (block 8-14) until the target state is achieved. The modified process comprises causing sending a selected action to the test system, and when feedback is received, it is not determined whether a target state is achieved but whether all actions in the exploration action space have been tested, and the next action is selected, using the probability information, amongst untested actions within the exploration action space. The feedback may comprise network performance counter values of network performance counters, logs generated by the network elements, and information on alarms.

When there are no untested actions in the exploration action space, the test agent generates, based on feedback received, a report (message 8-15) indicating at least success or fault. The report may indicate success or fault per an action tested, for example tuples, e.g. {action , state , alarms, status = { failure, success, } } which may be shown to a user of the test executor via the user interface. The report may contain more information on a fault. A fault may be an unexpected problem encountered, or an expected problem or a new issue found during the test execution.

As can be seen from the example of Fig. 8, given measured network performance counter values in an existing real network, it is possible to conduct a fault discovery effectively and efficiently around a specific enacted network state.

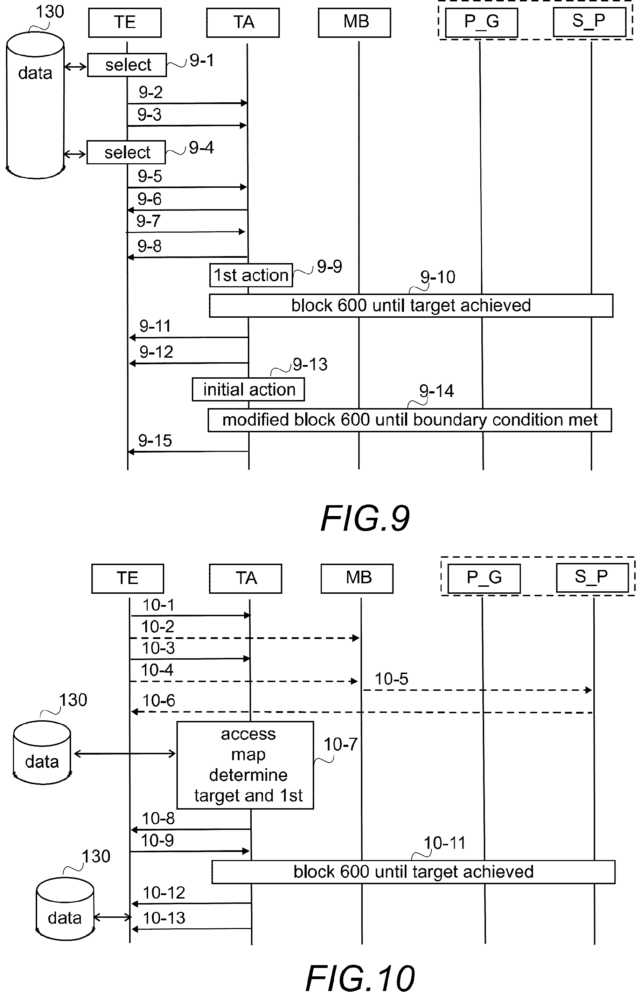

Fig. 9 illustrates an example of a stress testing in which, after a target state is achieved, a same action is iteratively performed to verify boundary conditions in a real network with statistical distributions and confidence intervals. In the illustrated example, it is assumed that the data storage 130 comprises at least one or more stored policies with corresponding associated states, and that the test agent obtains a target state and a policy for the target state by receiving them.

Referring to Fig. 9, the test executor selects (block 9-1) from the data storage one of the stored policies and an associated state, and sends the policy (message 9-2) and the associated state as a target state (message 9-3) to the test agent. Further, the test executor selects (block 9-4) an action which is an initial robustness action and a boundary condition. For example, the task may be "find central processing unit (CPU) overload impact by increase handover in a target state" the target state may be "UE attach rate = 20 per min, handover rate 30 per min ", and one or more stress states may be "UE attach rate = 20 per min, handover rate 60 per min ", increasing a handover rate by 30 per minute until the boundary condition is met. Naturally a stress state following another stress state may have different content. The boundary condition may be a threshold value for example 150 handovers per minute, and the boundary condition is met, when the threshold value is exceeded. The initial robustness action and the boundary condition are sent (message 9-5) to the test agent.

When the test agent has received the policy, the target state, the initial robustness action and the boundary condition, the test agent indicates (message 9-6) to the test executor that the test agent is ready for action. The test executor sends instruction (message 9-7) to start the test execution. The test agent starts the execution, informs (message 9-8) the test executor correspondingly (e.g. sending action in progress), and determines (block 9-9) the first action based on the target state and the policy.

Then the process described with block 600 in Fig. 6 is repeated (block 9-10) until the target state is achieved, or a malfunction is detected, or a predetermined time has lapsed after the start of the process, whichever occurs first. Within block 600, when a next action is determined, also the policy is used in the determining the next action.

In the illustrated example, it is assumed that the process of block 600 ends because the target state is achieved, the test agent reports (message 9-11) that the target state is achieved and informs (message 9-12) that the robustness test is now in progress.

The test agent determines (block 9-13), an action corresponding to the initial robustness action to be an action to be tested, and then a process, which is a modified process described with block 600 in Fig. 6 is repeated (block 9-14) until the boundary condition is met. The modified process comprises causing sending an action to be tested to the test system, and when feedback is received, it is not determined whether a target state is achieved but it is determined, based on the feedback, whether the boundary condition is met, and the next action to be tested is determined by adjusting iteratively the action sent to the test system. When the boundary condition is met, the test agent generates a report indicating robustness result and sends the report (message 9-15) to the test executor. The report may be an indication of "robust" or "not robust" and/or the report may contain more detailed information. The more detailed information may be last X actions and last X network performance counter values of the network performance counters and/or logs and/or alarm information.

Fig. 10 illustrates an example of a target state learning in a mode which may be called a custom mode. In the illustrated example, it is assumed that the test agent has access to a historical dataset comprising actions with associated historical network performance counter values representing corresponding associated historical states in the data storage 130.

Referring to Fig. 10, the test executor indicates (message 10-1) to the test agent that the testing mode is custom, and may send (message 10-2) to the message broker custom mode setting. For example, optimizing on action request mapping towards the test system, or advanced filtering of feedback, e.g. network performance counter values or logs or alarm information, may be shared with the message broker. Based on input from the user, the test executor sends (message 10-3) to the test agent a custom state space and an allowable action space. The allowable action space comprises for actions within the allowable action space a first set of constraints to be met and the custom state space comprises for a subset of network performance counters a second set of constraints to be met. Further, based on user input, the test executor may send via the message broker configurations for the test system. In the illustrated example of Fig. 10, the message broker receives (message 10-4) a configuration for the serving part, and forwards (message 10-5), after converting if needed, the configuration to the serving part, which acknowledges (message 10-6) the configuration to the test executor. The configuration may comprise parameter settings, for example, and the acknowledgement may confirm that the parameter settings for the custom mode are successfully applied at the serving part.

When the test agent has received (message 10-3) the custom state space and the allowable action space, the test agent accesses (block 10-7) the historical dataset comprising the actions with associated historical network performance counter values, maps (block 10-7) the first set of constraints to the actions in the historical dataset and the second set of constraints to the historical states in the historical dataset to find at least one pair of an action and an associated historical state that meet the first set of constraints and the second set of constraints. Then the test agent obtains, or determines, (block 10-7) a target state by using the state in a pair that is found as the target state, and determines (block 10-7) an action in the pair to be the first action to be performed to achieve the target state. Then the test agent indicates (message 10-8) to the test executor that the test agent is ready for action. The test executor then sends (message 10-9) instructions to start learning a policy to achieve the target state.

Then the process described with block 600 in Fig. 6 is repeated (block 10-10) until the target state is achieved, or a malfunction is detected, or a predetermined time has lapsed after the start of the process, whichever occurs first. In the illustrated example it is assumed that the target state is achieved, and the test agent sends the outcome (message 10-11), i.e. the policy for the target state (custom target state), and target state details (message 10-12) to the test executor which then may store the policy and the target state details to the data storage. In the illustrated example, the outcome is a policy for a custom state in the serving part.

The above process may be described also as follows, when the test agent has access to a historical dataset of N tested data samples, wherein each data sample represents a tuple of experienced configuration parameters and performance counters (PCs), or more precisely their values. These samples are collected from previous testing experiments conducted in the testing environment. The dataset is denoted as: $X = \left\{\left({a}_{n}, {s}_{n}\right):n=1,…,N\right\} ,$ where **a**ₙ denotes the executed action (namely, configuration parameters) in the *n*-th sample, while **s***ₙ* denotes the experienced state (namely, PCs), as a reaction to **a**ₙ.

The TE forwards to the TA a state space control logic, e.g., a set of state constraints that must be satisfied for a subset of PCs in the testing environment. Unlike in the "Auto Mode," described above with Fig. 6, the TE does not need to specify exact PC values; instead, it defines constraints that should be met. Further, the TE forwards to the TA the action space control logic, e.g., a set of constraints on configuration parameters, defining the allowable action space. For the cold start(s), state(s) and action(s) in the historical set *X* that satisfy the given state and action constraints are selected.

For each selected state
▪ the corresponding action is selected as the initial action for the cold start
▪ after executing the cold start, the reinforcement learning process begins, iterating until convergence to the desired state (the selected state).

The custom mode provides a possibility to efficiently generate a test payload by selecting a subset of configurations in the test setup, including configurations for the payload generating part and configurations for the serving part. For example, the serving part may be configured to measure, or collect, values for a subset of network performance counters (if not, then the values are collected using original configuration received during the test set up.)

Even though in the above example one testing agent is used, more than one test agent may be used. For example, there may be one test agent performing the functionality described with Fig. 6 and another test agent sending one or more operator actions to the test system, the two test agents working independently. Examples of operator actions include a network configuration change and a software upgrade.

As can be seen from the above examples, the test agent part can be used, without any network domain expertise, for example expertise in a radio access network domain, and yet it is possible to carry out exploratory testing, robustness testing and stress testing to identify, for example, system break points. The test agent part provides a testing tool that facilitates to comprehensively assess radio network performance, for example, or exhaustively test all possible scenarios, to identify and mitigate potential issues or faults, thereby helping to ensure the reliability and performance of networks while avoiding attempting to brute-force all possible combinations of a predefined set of network configurations to meet test requirements.

The blocks and related functions and information exchanges (messages) described above by means of Fig. 1 to Fig. 10 are in no absolute chronological order, and some of them may be performed simultaneously or in an order differing from the described one. Other functions can also be executed between them or within them, and other information may be transmitted, and/or other rules applied. Some of the blocks or part of the blocks or one or more pieces of information can also be left out or replaced by a corresponding block or part of the block or one or more pieces of information.

Fig. 11 illustrates an apparatus 1101 comprising means for causing the apparatus 1101 to perform one or more of the examples/example embodiments, e.g. the method according to Fig. 2 or Fig. 3, or a functionality of the test agent, possibly combined with a functionality of the message broker according to any of Fig. 5 to Fig. 10, described above. The apparatus 1101 may be any apparatus, or electronic device, such as, or comprising, or comprised in a server or computer, for example, in a testing platform that may be configured to provide performance testing capabilities, e.g. configured to implement at least a test agent part related functionality. Fig. 12 illustrates an apparatus that may implement distributed functionality of the apparatus illustrated in Fig. 11.

According to an embodiment, there is provided an apparatus comprising at least means for obtaining at least one target state for a wireless network; means for determining a first action to be performed to achieve the target state; means for causing sending the first action to a test system comprising a payload generating part and a serving part comprising network elements, the payload generating part generating to the network elements payload; means for receiving from the test system feedback comprising at least network performance counter values of network performance counters, the network performance counter values being collected on the serving part under the payload and representing a current state of the serving part; means for determining, based at least on the network performance counter values received, whether the serving part achieved the target state; means for determining, when the target state is not achieved, based on at least a difference between the target state and a state determined using at least the network performance counter values received, a next action to be performed to achieve the target state, wherein the means for causing sending are configured to cause sending of the next action to the test system; and the means for determining the next action are configured to repeat the determining the next action until the target state is achieved. In an embodiment, the means comprise at least one processor and at least one memory storing instructions that, when executed by the at least one processor, cause the performance of the apparatus.

The apparatus 1101may comprise, for example, a circuitry or a chipset applicable for realizing one or more of the example embodiments described above. In the illustrated example of Fig. 11, the apparatus 1101 comprises one or more control circuitries 1120, such as at least one processor, and at least one memory 1130 including one or more algorithms 1131, such as a computer program code (software, SW, or instructions), wherein the at least one memory and the computer program code (software) are configured, with the at least one processor, to cause the apparatus to carry out any one of the exemplified functionalities of a corresponding apparatus, described above with any of Fig. 1 to Fig. 10. Said at least one processor (including e.g. dual-core and multiple-core processors), or a circuitry (circuitries), is configured to read and write data to and from the memory 1130. The memory 1130 may comprise one or more memory units. Said at least one memory 1130 may also comprise at least one database (DB) 1132.

The one or more control circuitries 1120 of the apparatus 1101 comprise at least a testing circuitry 1121, which is configured at least to implement functionality relating to the test agent (part), as discussed for example with Fig. 1 to Fig. 10. To this end, testing circuitry 1121 of the apparatus 1101 is configured to carry out at least some of the functionalities described above, e.g., by means of Fig. 1 to Fig. 10, for example, using one or more individual circuitries.

The memory 1130 may be implemented using any suitable data storage technology, such as semiconductor based memory devices, flash memory, magnetic memory devices and systems, optical memory devices and systems, fixed memory and removable memory. The memory may comprise a configuration database for storing configuration data and/or policies with associated states, and other data used in different testing scenarios, for example in those described with Fig. 6 to Fig. 10.

The apparatus 1101 may further comprise different interfaces 1110 such as one or more communication interfaces (TX/RX) comprising hardware and/or software for realizing communication connectivity according to one or more communication protocols. The one or more communication interfaces 1110 may enable connecting to the test system and/or to other apparatuses in the testing platform. The one or more communication interfaces 1110 may comprise standard well-known components such as an amplifier, filter, frequency-converter, (de)modulator, and encoder/decoder circuitries, controlled by the corresponding controlling units.

In an embodiment, as shown in Fig. 12, at least some of the functionalities of the apparatus of Fig. 11 may be shared between two physically separate devices, forming one operational entity. Therefore, the apparatus may be seen to depict the operational entity comprising one or more physically separate devices for executing at least some of the described processes. Thus, the apparatus of Fig. 12, utilizing such shared architecture, may comprise a first distributed part (DP1) 1220, or a first distributed unit, such as a host computer or a server computer, operatively coupled (e.g. via a wireless or wired network) to a second distributed part (DP2) 1222, or a second distributed unit DU located in another device or apparatus. In an embodiment, at least some of the described processes of the test agent part may be performed by the DP1 1220, and at least some of the described processes of the message broker part may be performed by one or more DP2s 1222.

Similar to Fig. 11, the apparatus of Fig. 12 may comprise one or more control circuitry (CNTL) 1120, such as at least one processor, and at least one memory (MEM) 1130, including one or more algorithms (PROG) 1131, such as a computer program code (software SW, or instructions) wherein the at least one memory and the computer program code (software, instructions) are configured, with the at least one processor, to cause the apparatus to carry out any one of the exemplified functionalities described above, e.g., by means of Fig. 1 to Fig. 10, for example.

In embodiments, the DP1 1220 may generate a virtual network through which the DP1 1220 communicates with the DP2 1222. In general, virtual networking may involve a process of combining hardware and software network resources and network functionality into a single, software-based administrative entity, a virtual network. Network virtualization may involve platform virtualization, often combined with resource virtualization. Network virtualization may be internal virtual networking which provides network-like functionality to the software containers on a single system.

As used in this application, the term 'circuitry' may refer to one or more or all of the following: (a) hardware-only circuit implementations, such as implementations in analog and/or digital circuitry, and (b) combinations of hardware circuit(s) and software, such as (as applicable): (i) a combination of analog, digital and/or quantum hardware circuit(s) with software/firmware and (ii) any or all portions of hardware processor(s), including digital and/or quantum processor(s),with software, and memory(ies) that work together to cause an apparatus, such as a mobile device, computing device, access device, or server, to perform various functions, and (c) any or all portions of hardware circuit(s), such as microprocessor(s), processor(s), and/or quantum processor(s), that requires software (e.g., firmware) for operation, but the software may not be present when it is not needed for operation.

This definition of 'circuitry' applies to all uses of this term in this application, including in any claims. As a further example, as used in this application, the term 'circuitry' also covers an implementation of merely a hardware circuit or processor (or multiple processors) or a portion of a hardware circuit or processor and its (or their) accompanying software and/or firmware. The term 'circuitry' also covers, for example and if applicable to the particular claim element, a baseband integrated circuit or processor integrated circuit for a mobile device or a similar integrated circuit in a server, a cellular network device, or other computing or network device.

Embodiments and examples as described may also be carried out in the form of a computer process defined by a computer program or portions thereof. Embodiments of the functionalities described in connection with Fig. 1 to Fig. 10 may be carried out by executing at least one portion of a computer program comprising corresponding instructions. The computer program may be provided as a computer readable medium comprising program instructions stored thereon or as a non-transitory computer readable medium comprising program instructions stored thereon. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. The term "non-transitory," as used herein, is a limitation of the medium itself (i.e., tangible, not a signal ) as opposed to a limitation on data storage persistency (e.g., random access memory RAM vs. read only memory ROM). The computer readable instructions may have been pre-stored to the memory 1130 or, alternatively or additionally, they may be received, by the apparatus, via an electromagnetic carrier signal and/or may be copied from a physical entity such as a computer program product. Coding of software for carrying out the embodiments as shown and described is well within the scope of a person of ordinary skill in the art.

The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. For example, non-volatile memory stores the computer readable instructions, and the processor executes the instructions using volatile memory for temporary storage of data and/or instructions.

Even though the embodiments have been described above with reference to examples according to the accompanying drawings, it is clear that the embodiments are not restricted thereto but can be modified in several ways within the scope of the claims. Therefore, all words and expressions should be interpreted broadly and they are intended to illustrate, not to restrict, the embodiment within the scope of claims. It will be obvious to a person skilled in the art that, as technology advances, the inventive concept can be implemented in various ways within the scope of the claims. Further, it is clear to a person skilled in the art that the described embodiments may, but are not required to, be combined with other embodiments in various ways within the scope of the claims.

## Claims

1. An apparatus comprising means fort:
obtaining at least one target state for a wireless network;
determining a first action to be performed to achieve the target state;
causing sending the first action to a test system comprising a payload generating part and a serving part comprising network elements, the payload generating part generating to the network elements payload;
receiving from the test system feedback comprising at least network performance counter values of network performance counters, the network performance counter values being collected on the serving part under the payload and representing a current state of the serving part;
determining, based at least on the network performance counter values received, whether the serving part achieved the target state;
when the target state is not achieved, determining, based on at least a difference between the target state and a state determined using at least the network performance counter values received, a next action to be performed to achieve the target state and causing sending the next action to the test system; and
repeating the determining the next action and causing sending the next action to the test system until the target state is achieved.

2. The apparatus of claim 1, further comprising means for:
receiving the feedback by requesting the feedback at predetermined time intervals.

3. The apparatus of claim 1 or 2, further comprising means for obtaining a sequence of two or more target states, and processing the two or more target states one by one according to the sequence.

4. The apparatus of any of the preceding claims, wherein an action comprises one or more components.

5. The apparatus of any of the preceding claims, further comprising means for:
receiving one or more lists of network performance counter values to be used to determine corresponding one or more states;
obtaining the target state by taking one of the lists of network performance counter values and by using the network performance counter values in the list to determine the target state ;
accessing a historical dataset comprising actions with associated historical states;
mapping the target state to a closest historical state in the historical dataset;
determining an action associated with the closest historical state to be the first action to be performed to achieve the target state;
when the target state is achieved, storing a policy for the target state; and
performing obtaining, accessing, mapping and determining for the one or more lists received.

6. The apparatus of any of the preceding claims, further comprising means for:
obtaining the at least one target state by receiving the target state and a policy for the target state; and
determining the next action using also the policy.

7. The apparatus of any of the preceding claims, further comprising means for:
receiving in the feedback logs generated by the network elements, and information on alarms;
determining, using the logs and the information, whether a malfunction is detected;
upon the malfunction being detected, stopping to repeat the determining the next action and causing sending the next action to the test system, and report the malfunction.

8. The apparatus of any of the preceding claims, further comprising means for:
receiving an exploration action space with probability information;
when the target state is achieved, performing the following as long as there are untested actions in the exploration action space:
selecting, using the probability information, an untested action within the exploration action space to an action to be tested;
causing sending the action to the test system;
receiving from the test system feedback comprising network performance counter values of network performance counters, logs generated by the network elements, and information on alarms;
when there are no untested actions in the exploration action space, generating, based on feedback received, a report indicating at least success or fault.

9. The apparatus of claim 8, wherein the probability information is a probabilistic transition graph.

10. The apparatus of any of the preceding claims, further comprising means for:
receiving an action which is an initial robustness action with a boundary condition;
when the target state is achieved, performing the following:
causing sending an action corresponding to the initial robustness action to the test system;
receiving from the test system the feedback;
determining, based on the feedback, whether the boundary condition is met;
repeating as long as the boundary condition is not met:
determining the next action by adjusting iteratively the action sent to the test system;
causing sending the next action to the test system;
receiving from the test system the feedback;
determining, based on the feedback, whether the boundary condition is met; and
when the boundary condition is met, generating a report indicating robustness result.

11. The apparatus of any of the preceding claims, further comprising means for:
receiving a custom state space and an allowable action space, wherein the allowable action space comprises for actions within the allowable action space a first set of constraints to be met and the custom state space comprises for a subset of network performance counters a second set of constraints to be met;
accessing a historical dataset comprising actions with associated historical network performance counter values representing corresponding associated historical states;
mapping the first set of constraints to the actions and the second set of constraints to the historical states in the historical dataset to find at least one pair of an action and an associated historical state that meet the first set of constraints and the second set of constraints;
obtaining the target state by using the state in a pair as the target state;
determining an action in the pair to be the first action to be performed to achieve the target state; and
when the target state is achieved, storing a policy for the target state.

12. The apparatus of any of the preceding claims, further comprising means for stopping determining the next action and causing sending the next action to the test system when a predetermined time has lapsed after causing sending a corresponding first action.

13. The apparatus of any of the preceding claims, further comprising means for:
converting an action to be sent to the test system to be according to a communication protocol used in the payload generating part;
receiving the feedback by retrieving the feedback from the serving part using communication protocol used in the serving part, converting the feedback to be according to the protocol used by the apparatus, and filtering the feedback.

14. A method comprising:
obtaining at least one target state for a wireless network;
determining a first action to be performed to achieve the target state;
causing sending the first action to a test system comprising a payload generating part and a serving part comprising network elements, the payload generating part generating to the network elements payload;
receiving from the test system feedback comprising at least network performance counter values of network performance counters, the network performance counter values being collected on the serving part under the payload and representing a current state of the serving part;
determining, based at least on the network performance counter values received, whether the serving part achieved the target state;
when the target state is not achieved, determining, based on at least a difference between the target state and a state determined using at least the network performance counter values received, a next action to be performed to achieve the target state and causing sending the next action to the test system; and
repeating the determining the next action and causing sending the next action to the test system until the target state is achieved.

15. A computer readable medium comprising program instructions which, when executed by an apparatus, cause the apparatus to perform at least:
obtaining at least one target state for a wireless network;
determining a first action to be performed to achieve the target state;
causing sending the first action to a test system comprising a payload generating part and a serving part comprising network elements, the payload generating part generating to the network elements payload;
receiving from the test system feedback comprising at least network performance counter values of network performance counters, the network performance counter values being collected on the serving part under the payload and representing a current state of the serving part;
determining, based at least on the network performance counter values received, whether the serving part achieved the target state;
when the target state is not achieved, determining, based on at least a difference between the target state and a state determined using at least the network performance counter values received, a next action to be performed to achieve the target state and causing sending the next action to the test system; and
repeating the determining the next action and causing sending the next action to the test system until the target state is achieved.
